# FASCICULE DE BREVET EUROPEEN

(11) **EP 0 742 630 B1**
(45) Date de publication et mention de la délivrance du brevet: **24.10.2001**
(21) Numéro de dépôt: 96400969.0
(22) Date de dépôt: 07.05.1996
(51) Int. Cl.: H02H 7/085

(54) **Procédé de commande de mouvement d'un ouvrant**
Verfahren zur Steuerung der Bewegung von Flügeln
Method of controlling the movement of an opening panel

(30) Priorité: 11.05.1995 FR 9505566
(43) Date de publication de la demande: 13.11.1996
(73) Titulaire: ATRAL, F-38190 Crolles (FR)
(72) Inventeur: Piednoel, François, 38190 Laval (FR); Husser, Jacques, 38330 Saint-Ismier (FR)
(74) Mandataire: Casalonga, Axel

(56) Documents cités:
- EP-A- 0 581 509
- GB-A- 2 147 432

## Description

La présente invention concerne un procédé de commande de mouvement d'un ouvrant tel qu'une porte, une barrière, un volet, ou autres, en particulier à mouvements horizontaux ou verticaux, rotatifs, coulissants, basculant ou à enroulement, ou combinés.

Dans certains automatismes connus de commande de mouvement d'ouverture et de fermeture d'ouvrants, l'utilisateur ou l'installateur fixe un seuil de sécurité lié au couple moteur. Comme proposé dans le document EP-A-581 509, si le couple moteur atteint ce seuil de sécurité, notamment lorsque l'ouvrant rencontre un obstacle sur son chemin, l'automatisme arrête le mouvement et éventuellement l'inverse. L'obstacle étant enlevé, l'automatisme peut être activé pour que le mouvement reprenne normalement en prenant à nouveau en compte le seuil de sécurité précité.

Le seuil de sécurité précité est réglable par l'utilisateur ou l'installateur mais nécessite une intervention sur l'automatisme. Ainsi, au cas où l'ouvrant se trouve arrêté à cause du passage du seuil de sécurité précité, l'utilisateur ou l'installateur règle ce seuil à un niveau supérieur pour que l'automatisme puisse à nouveau fonctionner et exécuter les mouvements de l'ouvrant. Il en résulte que, pour ne pas intervenir sur le réglage du seuil de sécurité précité, l'utilisateur ou l'installateur ont tendance à placer ce seuil de sécurité à un niveau élevé de telle sorte qu'il ne remplit plus réellement son rôle de sécurité et que lors de son mouvement l'ouvrant peut occasionner des blessures notamment d'enfants ou d'animaux.

Un objet de la présente invention consiste à proposer un procédé de commande de mouvement d'un ouvrant permettant de franchir en toute sécurité et à la volonté de l'utilisateur un obstacle que pourrait rencontrer l'ouvrant lors de son mouvement, que cet obstacle soit momentané ou par exemple de la neige ou de la boue ou que cet obstacle soit persistant, dû par exemple à un vieillissement ou une usure des organes d'entraînement.

Un autre objet de la présente invention est de proposer un procédé de commande d'un mouvement susceptible d'engendrer une sécurité adaptée en particulier aux caractéristiques mécaniques de l'ouvrant et de ses organes d'entraînement.

Un autre objet de la présente invention est de proposer un procédé de commande de mouvement d'un ouvrant susceptible de tenir compte des conditions d'utilisation, en particulier à savoir la présence d'un obstacle total au mouvement de l'ouvrant produisant un choc ou la présence d'un obstacle à évolution plus lente tel que le vent ou des usures mécaniques des organes d'entraînement, permettant ainsi d'obtenir une sensibilité adaptée aux événements.

Le procédé de commande de mouvement d'un ouvrant, tel qu'une porte, une barrière, un volet, ou autres, entraîné par un organe-moteur sur au moins une partie de la course dudit ouvrant, dans lequel l'organe-moteur peut être mis en marche ou arrêté par un ordre de commande marche-arrêt, consiste selon l'invention à fixer un seuil de sécurité initial égal à une valeur déterminée d'une donnée de base représentative de l'effort fourni par ledit organe-moteur pour entraîner l'ouvrant, à mesurer cette donnée de base au cours des mouvements de l'ouvrant, à comparer cette valeur mesurée de cette donnée de base audit seuil de sécurité initial et à provoquer un arrêt de sécurité dudit organe-moteur au cas où la valeur mesurée de cette donnée de base atteint ce seuil de sécurité initial.

Selon l'invention, le procédé de commande consiste, suite à l'arrêt de sécurité précité, par un nouvel ordre de commande, à inhiber ledit seuil de sécurité initial, à fixer un nouveau seuil de sécurité représentatif d'un effort supérieur et à provoquer la remise en marche dudit organe-moteur, et qu'il consiste à provoquer un arrêt de sécurité dudit organe-moteur au cas où la valeur mesurée de ladite donnée de base atteint ledit nouveau seuil de sécurité.

Selon l'invention, le procédé peut avantageusement consister, au cas où la valeur mesurée de la donnée de base atteint à nouveau ledit seuil de sécurité initial lors d'au moins le mouvement suivant de l'ouvrant, à substituer audit seuil de sécurité initial le nouveau seuil de sécurité précité.

Selon l'invention, le procédé peut avantageusement consister, au bout d'une durée prédéterminée ou d'un nombre prédéterminé de mouvements de l'ouvrant suite à l'arrêt de sécurité précité, à substituer au nouveau seuil de sécurité précité ledit seuil de sécurité initial au cas où la valeur mesurée de la donnée de base n'atteint pas ledit nouveau seuil de sécurité au bout de cette durée ou de ce nombre.

Selon l'invention, le procédé peut avantageusement consister à fixer au moins un seuil de sécurité maximum représentatif d'un effort maximum et à provoquer un arrêt de sécurité dudit organe-moteur au cas où la valeur mesurée de la donnée de base précitée atteint ce seuil de sécurité maximum.

Selon l'invention, le nouvel ordre de commande précité peut être identique audit ordre de commande de marche.

Selon l'invention, le nouvel ordre de commande précité peut consister en un ordre de commande particulier.

Selon l'invention, le nouvel ordre de commande précité peut consister en un maintien dudit ordre de commande de marche au moins pendant une durée préfixée.

Selon l'invention, le nouvel ordre de commande pourrait être ledit ordre de commande de marche, à condition que cet ordre de commande de marche soit activé au maximum dans un délai déterminé par rapport au moment de l'arrêt de sécurité précité.

Selon l'invention, le procédé peut avantageusement consister à fixer plusieurs seuils de sécurité initiaux répartis sur la longueur de la course de l'ouvrant, auxquels sont respectivement associés des nouveaux seuils de sécurité.

Selon l'invention, le procédé peut avantageusement consister, au cours de chaque mouvement de l'ouvrant, à diviser au moins une partie du temps d'ouverture et/ou de fermeture correspondant à la course totale de l'ouvrant en tranches de temps ou au moins une partie de cette course en tranches de déplacement, à effectuer au cours de chaque mouvement d'ouverture et/ou de fermeture de l'ouvrant, dans chacune des tranches précitées, la mesure d'une donnée représentative de l'effort fourni par l'organe-moteur, à calculer des différences consistant en la différence entre une valeur de base fonction d'au moins la valeur mesurée de la donnée précitée dans chacune des tranches précitées et une valeur de base fonction d'au moins la valeur mesurée de la donnée précitée dans la tranche antérieure, et consister (1), au cours d'un mouvement d'apprentissage, à fixer dans chacune des tranches précitées un seuil de sécurité initial dépendant de la différence précitée associée à au moins une tranche, et (2) au cours de chacun des mouvements de l'ouvrant succédant audit mouvement d'apprentissage, à comparer successivement la différence précitée associée à chaque tranche au seuil de sécurité initial associé, et à provoquer l'arrêt dudit organe-moteur si cette différence atteint ce seuil de sécurité initial.

Selon l'invention, le procédé peut avantageusement consister à diviser au moins une partie du temps d'ouverture et/ou de fermeture correspondant à la course totale de l'ouvrant en zones de temps ou au moins une partie de cette course en zones de déplacement, et à fixer un seuil de sécurité initial commun dans les tranches précitées de chacune de ces zones.

Selon l'invention, la valeur de base précitée peut être fonction de la moyenne d'au moins deux données mesurées successives.

Selon l'invention, le procédé peut avantageusement consister, au cours des mouvements de l'ouvrant à fixer, à chaque fois que la différence précitée passe par zéro, un seuil de sécurité complémentaire fonction de la valeur de la donnée mesurée dans cette tranche, à provoquer un arrêt de sécurité dudit organe-moteur lors du mouvement ultérieur de l'ouvrant au cas où une valeur mesurée de la donnée précitée ultérieure atteint ce seuil de sécurité complémentaire.

Selon l'invention, le procédé peut avantageusement consister à modifier la durée de chacune des tranches et/ou des zones de temps précitées en fonction de l'énergie délivrée par la source d'énergie faisant fonctionner ledit organe-moteur.

La présente invention sera mieux comprise à l'étude d'un automatisme et d'un procédé de commande de mouvement d'un ouvrant, décrits à titre d'exemples non limitatifs et illustrés par le dessin sur lequel :
- la figure 1 représente en vue de dessus un ouvrant et son mécanisme d'entraînement ;
- la figure 2 représente un schéma général électrique d'un automatisme selon la présente invention ;
- la figure 3 représente un schéma de fonctionnement sous la forme d'un organigramme de l'automatisme selon la présente invention.

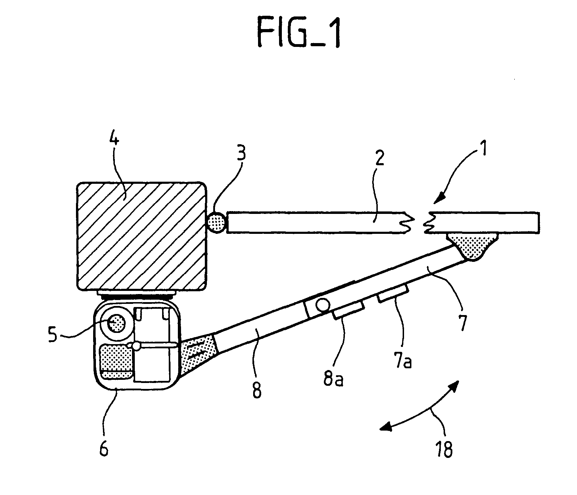

En se reportant à la figure 1, on voit qu'on a représenté une barrière repérée d'une manière générale par la référence 1 qui présente un ouvrant ou battant 2 à mouvement pivotant articulé sur un axe vertical 3 relié à un poteau 4.

L'ouvrant 2 est relié à l'axe vertical 5 d'un moteur électrique d'entraînement 6, associé à un réducteur mécanique, par un bras articulé à deux leviers 7 et 8, l'amplitude du mouvement de rotation de l'axe d'entraînement 5 et la disposition des leviers 7 et 8 étant telles que l'ouvrant 2 peut occuper deux positions extrêmes situées par exemple à environ 90°, ces deux positions extrèmes étant délimitées par des butées 7a et 8a portées par les leviers 7 et 8.

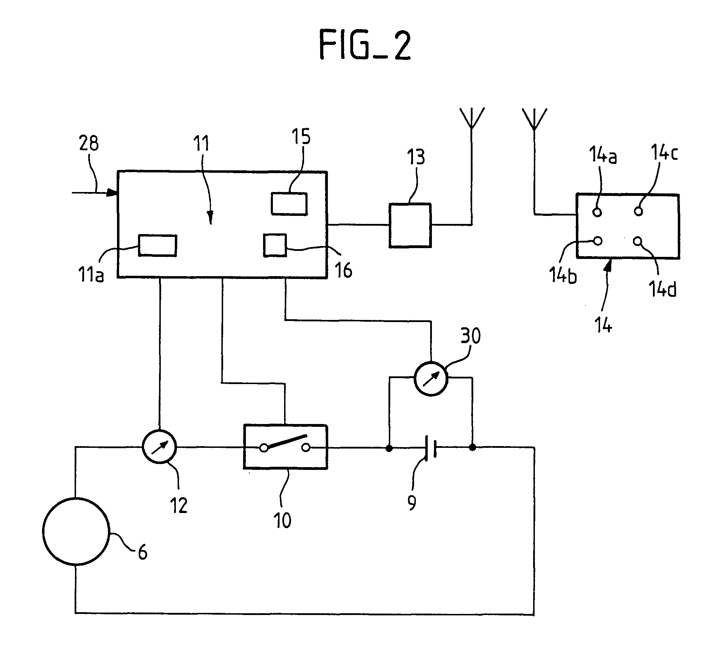

En se reportant maintenant à la figure 2, on voit que le moteur électrique 6 peut être alimenté par une source d'énergie électrique 9, par exemple par une batterie au travers d'un interrupteur électrique 10 de marche/arrêt. Un détecteur d'intensité 12 permet de mesurer l'intensité du courant électrique alimentant le moteur électrique 6.

Pour faire fonctionner cet interrupteur 10, l'automatisme comprend un circuit électronique de traitement et de gestion 11 qui reçoit des ordres de commande d'un circuit de détection et de décodage de signaux 13 émis par une télécommande 14. Dans l'exemple représenté, la liaison entre la télécommande 14 et le circuit de détection 13 s'effectue par des signaux radioélectriques.

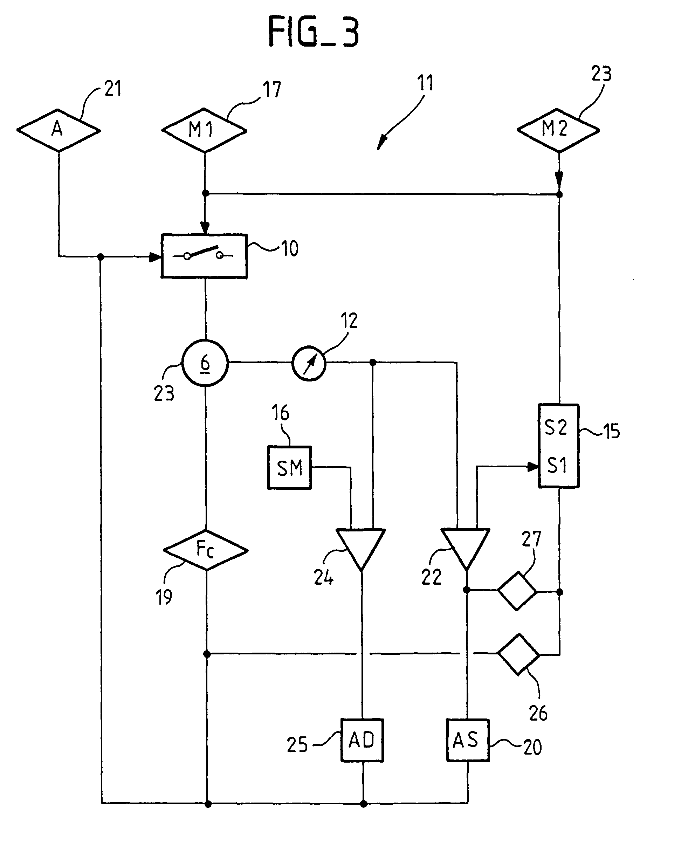

En se reportant maintenant à la figure 3, on va décrire la structure générale du circuit électronique 11 et son fonctionnement.

Le circuit 11 comprend une mémoire-registre 15 dans laquelle sont stockés un seuil de sécurité initial S1 représentatif d'une valeur déterminée de l'intensité du courant électrique traversant le moteur 6 et en conséquence une valeur déterminée de l'effort susceptible d'être fourni par ce dernier pour entraîner l'ouvrant 2, ainsi qu'un nouveau seuil de sécurité S2 correspondant à une valeur déterminée de l'intensité supérieure à la valeur de l'intensité fixant le seuil S1, et en conséquence correspondant à un effort supérieur susceptible d'être fourni par le moteur électrique 6 pour entraîner l'ouvrant 2.

Le circuit 11 comprend également une mémoire 16 dans laquelle est stocké un seuil de sécurité maximum SM correspondant à une valeur d'intensité du courant électrique susceptible de traverser le moteur électrique 6 supérieure à la valeur associée audit nouveau seuil de sécurité S2.

Le circuit électronique comprend également, référence 11a, un microprocesseur associé à des circuits périphériques.

En fonctionnement normal, un ordre de marche M1, référence 17, transmis par l'utilisateur grâce à la télécommande 14 en appuyant par exemple sur un bouton de marche 14a est reçu par le circuit 11 qui provoque la fermeture de l'interrupteur 10. Le moteur électrique 6 se trouve alimenté et provoque le mouvement, référence 18, d'ouverture de l'ouvrant 2, l'ouvrant s'immobilisant à cette fin de course.

L'ouvrant 2 arrivant en fin de course Fc, référence 19, le circuit 11 provoque l'ouverture de l'interrupteur 10 et en conséquence, l'arrêt de l'alimentation en énergie électrique du moteur électrique 6.

Au cours du mouvement, l'utilisateur peut transmettre un ordre d'arrêt volontaire, référence 21, en appuyant par exemple sur un bouton 14b de la télécommande 14 qui permet de provoquer l'ouverture de l'interrupteur 10 et en conséquence l'arrêt de l'alimentation du moteur électrique 6, l'ouvrant 2 s'immobilisant à un endroit choisi de sa course.

Bien entendu, le mouvement inverse de fermeture de l'ouvrant 2 peut être obtenu par inversion du courant traversant le moteur électrique 6, l'utilisateur transmettant un ordre de marche en conséquence en agissant par exemple sur un bouton 14c de la télécommande 14.

Au cours du mouvement de l'ouvrant 2, référence 18, la valeur de l'intensité du courant électrique traversant le moteur électrique 6 est mesurée par le détecteur d'intensité, référence 12, et cette valeur est comparée, référence 22, au seuil de sécurité initiale S1 stocké dans la mémoire-registre 15.

La valeur de l'intensité du courant électrique, référence 12, restant inférieure au seuil de sécurité initial S1, le mouvement de l'ouvrant 2 se produit comme précédemment décrit.

Au cas où cette valeur d'intensité mesurée, référence 12, atteint ou dépasse le seuil de sécurité initial S1, un ordre d'arrêt de sécurité AS, référence 20, provoque l'ouverture de l'interrupteur 10 et en conséquence l'arrêt du moteur électrique 6, l'ouvrant 2 s'immobilisant.

L'utilisateur transmettant à l'aide de la télécommande 14 un nouvel ordre de marche M2, référence 23, en appuyant par exemple sur un bouton 14d, ce nouvel ordre de marche M2 provoque la fermeture de l'interrupteur 10 et en conséquence à nouveau l'alimentation du moteur électrique 6 et l'entraînement de l'ouvrant 2. En même temps, l'intensité mesurée, référence 12, du courant électrique traversant le moteur électrique 6 est comparée, référence 22, non plus au seuil de sécurité initial S1 mais au nouveau seuil de sécurité S2 stocké dans la mémoire-registre 15.

Si cette valeur mesurée, référence 12, n'atteint pas ce nouveau seuil de sécurité S2, le mouvement de l'ouvrant 2 se produit normalement. Si au contraire cette valeur mesurée, référence 12, atteint ce nouveau seuil de sécurité S2, un ordre d'arrêt de sécurité AS, référence 20, assure l'ouverture de l'interrupteur 10 et provoque un arrêt de sécurité de l'ouvrant 2 par coupure de l'alimentation du moteur électrique 6.

Ainsi, le circuit électronique 11 permet de comparer graduellement l'effort fourni par le moteur électrique 6 au seuil de sécurité S1 puis au seuil de sécurité S2 au cas où le seuil S1 aurait été atteint ou franchi.

Au cours des mouvements de l'ouvrant 2, la valeur mesurée, référence 12, de l'intensité du courant électrique traversant le moteur électrique 6 est comparée, référence 24, au seuil maximum de sécurité SM stocké dans la mémoire 16. Si cette valeur mesurée, référence 12, atteint ce seuil maximum de sécurité SM, un arrêt définitif AD, référence 25, du moteur électrique 6 est provoqué par ouverture de l'interrupteur 10. Une intervention est alors obligatoire.

Dans une variante, le seuil de sécurité initial S1 peut être rétabli dès la fin de course, référence 19, du mouvement au cours duquel l'arrêt de sécurité AS s'est produit.

Dans une autre variante, le seuil de sécurité initial peut être rétabli au bout d'un nombre déterminé de mouvements dans le même sens de l'ouvrant 2, par comptage, référence 26, des fins de course, référence 19, de l'ouvrant 2 ou au bout d'une durée déterminée, référence 27, dans la mesure où le nouveau seuil de sécurité S2 n'est pas atteint lors de ces mouvements ou lors de cette durée.

Dans une autre variante, le nouveau seuil de sécurité S2 peut être maintenu définitivement et au cours des mouvements ultérieurs de l'ouvrant la valeur mesurée, référence 12, de l'intensité du courant électrique traversant le moteur électrique 6 sera comparée à ce nouveau seuil de sécurité S2. Dans ce cas, le seuil de sécurité S2 devient l'équivalent du seuil de sécurité initial S1 et un nouveau seuil de sécurité S3 peut être recalculé et égal par exemple à 1,20 fois ce nouveau seuil de sécurité initial S2. En conséquence, par récurcivité, il est possible de prévoir plusieurs seuils de sécurité et passer de l'un à l'autre comme décrit précédemment tant dans le sens croissant que dans le sens décroissant.

En ce qui concerne le nouvel ordre de marche M2, référence 23, il pourrait ne pas être différencié par rapport à l'ordre de marche normal M1, référence 17, et être tout simplement constitué par ce dernier. Il pourrait être dans une variante constitué par cet ordre de marche normal M1, référence 17, à condition qu'il soit maintenu pendant une durée déterminée par maintien en position appuyée du bouton de commande 14a de la télécommande 14. Dans une autre variante, le nouvel ordre de marche M2 pourrait être l'ordre de marche normal M1, à condition que cet ordre de marche normal M1 soit activé au maximum dans un délai déterminé par rapport au moment de l'arrêt de sécurité précité AS.

En ce qui concerne la détection de fin de course, référence 19, de l'ouvrant 2, cette détection de fin de course peut dans une variante être délivrée au circuit électronique 11 par des capteurs de fins de course de l'ouvrant 2.

Dans une autre variante, la détection de fin de course, référence 19, de l'ouvrant 2, peut être obtenue par l'intermédiaire de l'effet des butées 7a ou 8a qui lorsqu'elles sont atteintes provoquent une forte augmentation de la valeur mesurée, référence 12, de l'intensité du courant électrique traversant le moteur électrique 6, en combinaison avec la position de l'ouvrant 2, référence 18, déterminée par les capteurs de position ou par une durée prévue du mouvement en cours de l'ouvrant 2. Il convient en effet que, pour le circuit électronique 11, la détection de fin de course ainsi réalisée par la durée prévue du mouvement de l'ouvrant 2 ne soit pas considérée comme un dépassement des seuils de sécurité S1, S2, SM et n'influence par les effets de la comparaison de la valeur de l'intensité du courant électrique traversant le moteur électrique 6, un seuil particulier de détection de fin de course, de préférence différent des seuils S1, S2, SM pouvant être prévu à cet effet et enregistré dans une mémoire.

Dans une variante, la course de l'ouvrant 2 peut être divisée en plusieurs parties, soit déterminée par des portions ou secteurs angulaires de la course de l'ouvrant 2 délimités par des capteurs de positions, soit par des temps de passage de l'ouvrant 2 dans ces parties, pour lesquels seraient prévus respectivement des seuils de sécurité initiaux S1 différents auxquels seraient associés des nouveaux seuils de sécurité S2 différents. Par simplification, on peut prévoir un seuil de sécurité maximum SM sur la course totale de l'ouvrant 2.

En outre, des seuils initiaux de sécurité S1 différents dépendants d'événements différents peuvent être prévus, auxquels seraient associés des nouveaux seuils de sécurité S2 différents, pour par exemple prendre en compte des chocs durs impliqués à l'ouvrant 2 ou des actions extérieures lentes ou progressives ou occasionnelles agissant sur cet ouvrant.

Dans une variante, le seuil de sécurité initial S1 et le nouveau seuil de sécurité S2 peuvent être préfixés ou, dans une autre variante, peuvent résulter d'une opération d'apprentissage que le circuit électronique 11 peut réaliser de la manière suivante, sur un ordre d'apprentissage, référence 28, délivré au circuit 11 de préférence par un autre organe que la télécommande 14, par exemple par un bouton directement associé au circuit 11.

On va maintenant décrire une variante d'exécution particulière du fonctionnement du circuit électrinique 11 basée, par un calcul de dérivée, sur la variation de l'intensité du courant électrique traversant le moteur électrique 6.

Le circuit électronique 11 est adapté pour diviser la course de l'ouvrant 2, au cours de chacun de ses mouvements, en tranches Tn de temps, en prenant en compte la durée de chaque mouvement, ou en tranches Tn de déplacements angulaires déterminées par exemple par un capteur.

Dans chacune de ces tranches, le circuit électronique 11 est adapté pour effectuer, au cours de chaque mouvement d'ouverture et de fermeture de l'ouvrant 2, le relevé de la valeur de l'intensité du courant traversant le moteur 6 que lui délivre le capteur d'intensité 12.

Le circuit électronique 11 est adapté pour calculer des différences Dn consistant en la différence entre la valeur mesurée In de l'intensité dans chacune, Tn, des tranches précitées et la valeur mesurée In-1 de l'intensité dans la tranche antérieure Tn-1.

Après installation, l'utilisateur commande, par exemple grâce au bouton associé à l'entrée 28 du circuit électronique 11, un mouvement de l'ouvrant 2 au cours duquel le circuit électronique 11 effectue un apprentissage. Cet apprentissage consiste à fixer dans chacune des tranches précitées Tn un seuil de sécurité initial Sn1 dépendant de la différence précitée Dn associée à la tranche Tn en question. En exemple, les seuils de sécurité Sn1 peuvent être égaux à 1,20 fois la valeur des différences Dn. Ces seuils de sécurité initiaux Sn1 s'enregistrent dans la mémoire-registre 15. En outre, s'enregistrent dans la mémoire-registre 15 des nouveaux seuils de sécurité Sn2 associés à chacune des tranches Tn, par exemple égaux à 1,20 fois la valeur des seuils de sécurité initiaux Sn1.

Au cours de chacun des mouvements de l'ouvrant 2 succédant audit mouvement d'apprentissage et commandés normalement par la télécommande 14 comme décrit précédemment, le circuit électronique 11 compare successivement la différence Dn précitée associée à chaque tranche Tn au seuil de sécurité initial Sn1 associé et fonctionne, dans chaque tranche Tn, comme décrit précédemment pour provoquer si besoin l'arrêt de sécurité AS de l'ouvrant 2 et le passage du seuil de sécurité initial Sn1 au nouveau seuil de sécurité Sn2 avec reprise du mouvement.

Dans une variante simplifiée, le circuit électronique 11 est adapté pour diviser le temps d'ouverture et le temps de fermeture correspondant à la course totale de l'ouvrant 2 en zones Zm de temps ou cette course en zones Zm de déplacement, et pour fixer un seuil de sécurité initial Sm1 commun dans les tranches précitées de chacune de ces zones Zm. Par exemple, les seuils de sécurité initiaux Sm1 peuvent être égaux à 1,20 fois la valeur de la différence Dn la plus élevée dans la tranche Tn de chacune des zones Zm. Des seuils de sécurité Sm2 sont alors déterminés en fonction de ces seuils de sécurité initiaux Sm2 comme décrit précédemment. Dans une application particulière, on peut prévoir par exemple deux ou trois zones Zm et en conséquence deux ou trois seuils de sécurité initiaux Sm1 et deux ou trois nouveaux seuils de sécurité Sm2.

Dans une variante, le circuit électronique 11 peut être adapté pour calculer les différences Dn précitées à partir de moyennes de valeurs de l'intensité In, fournies par le capteur 12, prises dans deux ou plusieurs tranches Tn successives.

Selon une exécution préférée, le circuit électronique 11 est également adapté pour être sensible à un seuil de sécurité complémentaire qui s'enregistre dans la mémoire-registre 15. Pour celà, au cours des mouvements de l'ouvrant 2, le circuit électronique 11 fixe, à chaque fois que la différence Dn précitée passe par zéro, un seuil de sécurité complémentaire Sc égal par exemple à 1,20 fois la valeur de la l'intensité In mesurée dans la tranche Tn dans laquelle se produit ce passage par zéro. Le circuit électronique 11 provoque un arrêt de sécurité AS du moteur électrique 6 lors du mouvement de l'ouvrant 2 suivant cette tranche au cas où une valeur mesurée de l'intensité délivrée par le capteur 12 atteint ce seuil de sécurité complémentaire Sc.

Par ailleurs, dans le cas où les tranches Tn précitées sont des tranches de temps, la durée totale de la course de l'ouvrant 2 dépend de l'energie disponible dans la batterie 9. Il est donc souhaitable que le circuit électronique 11 soit adapté pour modifier la durée de chacune des tranches de temps Tn et des zones Zm de temps précitées en fonction de l'énergie délivrée par la batterie 9 faisant fonctionner ledit moteur électrique 6. Pour celà, le circuit électronique 11 reçoit la valeur de la tension aux bornes de la batterie 9 par un capteur de tension 30.

La présente invention ne se limite pas aux exemples décrits ci-dessus. Bien des variantes sont possibles sans sortir du cadre défini par les revendications annexées.

## Revendications

1. Procédé de commande de mouvement d'un ouvrant, tel qu'une porte, une barrière, un volet, ou autres, entraîné par un organe-moteur sur au moins une partie de la course dudit ouvrant, dans lequel l'organe-moteur peut être mis en marche ou arrêté par un ordre de commande marche (M1)-arrêt (A), consistant à fixer un seuil de sécurité initial égal à une valeur déterminée d'une donnée de base représentative de l'effort fourni par ledit organe-moteur pour entraîner l'ouvrant, à mesurer cette donnée de base au cours des mouvements de l'ouvrant, à comparer cette valeur mesurée de cette donnée de base audit seuil de sécurité initial et à provoquer un arrêt de sécurité dudit organe-moteur au cas où la valeur mesurée de cette donnée de base atteint ce seuil de sécurité initial, **caractérisé par le fait qu'**il consiste, suite à l'arrêt de sécurité précité (AS), par un nouvel ordre de commande (M2), à inhiber ledit seuil de sécurité initial (S1), à fixer un nouveau seuil de sécurité (S2) représentatif d'un effort supérieur et à provoquer la remise en marche dudit organe-moteur (6), et qu'il consiste à provoquer un arrêt de sécurité (AS) dudit organe-moteur au cas où la valeur mesurée de ladite donnée de base atteint ledit nouveau seuil de sécurité (S2).

2. Procédé selon la revendication 1, **caractérisé par le fait qu'**il consiste, au cas où la valeur mesurée de la donnée de base atteint à nouveau ledit seuil de sécurité initial (S1) lors d'au moins le mouvement suivant de l'ouvrant, à substituer audit seuil de sécurité initial (S1) le nouveau seuil de sécurité précité (S2).

3. Procédé selon l'une quelconque des revendications précédentes, **caractérisé par le fait qu'**il consiste, au bout d'une durée prédéterminée ou d'un nombre prédéterminé de mouvements de l'ouvrant suite à l'arrêt de sécurité précité (AS), à substituer au nouveau seuil de sécurité précité (S2) ledit seuil de sécurité initial (S1) au cas où la valeur mesurée de la donnée de base n'atteint pas ledit nouveau seuil de sécurité (S2) au bout de cette durée ou de ce nombre.

4. Procédé selon l'une quelconque des revendications précédentes, **caractérisé par le fait qu'**il consiste à fixer au moins un seuil de sécurité maximum (SM) représentatif d'un effort maximum et à provoquer un arrêt de sécurité (AD) dudit organe-moteur au cas où la valeur mesurée de la donnée de base précitée atteint ce seuil de sécurité maximum.

5. Procédé selon l'une quelconque des revendications précédentes, **caractérisé par le fait que** le nouvel ordre de commande (M2) précité est identique audit ordre de commande de marche (M1).

6. Procédé selon l'une quelconque des revendications précédentes, **caractérisé par le fait que** le nouvel ordre de commande (M2) précité consiste en un ordre de commande particulier.

7. Procédé selon l'une quelconque des revendications précédentes, **caractérisé par le fait que** le nouvel ordre de commande précité (M2) consiste en un maintien dudit ordre de commande de marche (M1) au moins pendant une durée préfixée.

8. Procédé selon l'une quelconque des revendications précédentes, **caractérisé par le fait que** le nouvel ordre de commande (M2) est constitué par ledit ordre de commande de marche (M1), à condition que cet ordre de commande de marche soit activé au maximum dans un délai déterminé par rapport au moment de l'arrêt de sécurité précité.

9. Procédé selon l'une quelconque des revendications précédentes, **caractérisé par le fait qu'**il consiste à fixer plusieurs seuils de sécurité initiaux (S1, S2) répartis sur la longueur de la course de l'ouvrant, auxquels sont respectivement associés des nouveaux seuils de sécurité.

10. Procédé selon l'une quelconque des revendications précédentes, **caractérisé par le fait qu'**il consiste, au cours de chaque mouvement de l'ouvrant :
- à diviser au moins une partie du temps d'ouverture et/ou de fermeture correspondant à la course totale de l'ouvrant en tranches de temps ou au moins une partie de cette course en tranches de déplacement,
- à effectuer au cours de chaque mouvement d'ouverture et/ou de fermeture de l'ouvrant, dans chacune des tranches précitées, la mesure d'une donnée représentative de l'effort fourni par le organe-moteur,
- à calculer des différences consistant en la différence entre une valeur de base fonction d'au moins la valeur mesurée de la donnée précitée dans chacune des tranches précitées et une valeur de base fonction d'au moins la valeur mesurée de la donnée précitée dans la tranche antérieure,
et qu'il consiste :
1) au cours d'un mouvement d'apprentissage :
- à fixer dans chacune des tranches précitées un seuil de sécurité initial dépendant de la différence précitée associée à au moins une tranche,
2) et au cours de chacun des mouvements de l'ouvrant succédant audit mouvement d'apprentissage :
- à comparer successivement la différence précitée associée à chaque tranche au seuil de sécurité initial associé,
- et à provoquer l'arrêt dudit organe-moteur si cette différence atteint ce seuil de sécurité initial.

11. Procédé selon la revendication 10, **caractérisé par le fait qu'**il consiste à diviser au moins une partie du temps d'ouverture et/ou de fermeture correspondant à la course totale de l'ouvrant en zones de temps ou au moins une partie de cette course en zones de déplacement, et à fixer un seuil de sécurité initial commun dans les tranches précitées de chacune de ces zones.

12. Procédé selon l'une des revendications 10 et 11, **caractérisé par le fait que** la valeur de base précitée est fonction de la moyenne d'au moins deux données mesurées successives.

13. Procédé selon l'une quelconque des revendications 10 à 11, **caractérisé par le fait qu'**il consiste, au cours des mouvements de l'ouvrant, à fixer, à chaque fois que la différence précitée passe par zéro, un seuil de sécurité complémentaire fonction de la valeur de la donnée mesurée dans cette tranche, et à provoquer un arrêt de sécurité dudit organe-moteur lors du mouvement ultérieur de l'ouvrant au cas où une valeur mesurée de la donnée précitée ultérieure atteint ce seuil de sécurité complémentaire.

14. Procédé selon l'une quelconque des revendications précédentes, **caractérisé par le fait qu'**il consiste à modifier la durée de chacune des tranches et/ou des zones de temps précitées en fonction de l'énergie délivrée par la source d'énergie faisant fonctionner ledit organe-moteur.

## Claims

1. Method for control of movement of a closure, such as a door, a barrier, a flap, or the like, driven by a motor element over at least part of the travel of the said closure, in which the motor element can be started or stopped by a start (M1)/stop (A) control demand, consisting in setting an initial safety threshold equal to a defined value of base data representative of the force supplied by the said motor element in order to drive the closure, in measuring this base data in the course of the movements of the closure, in comparing this measured value of this base data with the said initial safety threshold and in causing a safety stopping of the said motor element in the event that the measured value of this base data reaches this initial safety threshold, **characterized in that** it consists, following the abovementioned safety stopping (AS), via a new control demand (M2), in inhibiting the said initial safety threshold (S1), in setting a new safety threshold (S2) representative of a higher force and in causing the said motor element (6) to be started up again, and **in that** it consists in causing a safety stopping (AS) of the said motor element in the event that the measured value of the said base data reaches the said new safety threshold (S2).

2. Method according to Claim 1, **characterized in that** it consists, in the event that the measured value of the base data again reaches the said initial safety threshold (S1) during at least the next movement of the closure, in substituting the abovementioned new safety threshold (S2) for the said initial safety threshold (S1).

3. Method according to either one of the preceding claims, **characterized in that** it consists, on completion of a predetermined duration or of a predetermined number of movements of the closure following the abovementioned safety stopping (AS), in substituting the said initial safety threshold (S1) for the abovementioned new safety threshold (S2) in the event that the measured value of the base data does not reach the said new safety threshold (S2) on completion of this duration or of this number.

4. Method according to any one of the preceding claims, **characterized in that** it consists in setting at least one maximum safety threshold (SM) representative of a maximum force and in causing a safety stopping (AD) of the said motor element in the event that the measured value of the abovementioned base data reaches this maximum safety threshold.

5. Method according to any one of the preceding claims, **characterized in that** the abovementioned new control demand (M2) is identical to the said start control demand (M1).

6. Method according to any one of the preceding claims, **characterized in that** the abovementioned new control demand (M2) consists of a specific control demand.

7. Method according to any one of the preceding claims, **characterized in that** the abovementioned new control demand (M2) consists in maintaining the said start control demand (M1) at least for a preset duration.

8. Method according to any one of the preceding claims, **characterized in that** the new control demand (M2) consists of the said start control demand (M1), on condition that this start control demand be activated within a defined timescale at most with respect to the moment of the abovementioned safety stopping.

9. Method according to any one of the preceding claims, **characterized in that** it consists in setting several initial safety thresholds (S1, S2) distributed over the length of the travel of the closure, with which new safety thresholds are respectively associated.

10. Method according to any one of the preceding claims, **characterized in that** it consists, in the course of each movement of the closure:
- in dividing at least a part of the opening and/or closing time corresponding to the total travel of the closure into time segments, or at least a part of this travel into movement segments,
- in carrying out, in the course of each opening and/or closing movement of the closure, in each of the abovementioned segments, the measurement of data representative of the force supplied by the motor element,
- in calculating differences consisting of the difference between a base value which is a function of at least the measured value of the abovementioned data in each of the abovementioned segments and a base value which is a function of at least the measured value of the abovementioned data in the previous segment,
and **in that** it consists:
1) in the course of a learning movement:
- in setting, in each of the abovementioned segments, an initial safety threshold depending on the abovementioned difference associated with at least one segment,
2) and in the course of each of the movements of the closure succeeding the said learning movement:
- in successively comparing the abovementioned difference associated with each segment with the associated initial safety threshold,
- and in causing the said motor element to be stopped if this difference reaches this initial safety threshold.

11. Method according to Claim 10, **characterized in that** it consists in dividing at least a part of the opening and/or closing time corresponding to the total travel of the closure into time zones or at least a part of this travel into movement zones, and in setting a common initial safety threshold in the abovementioned segments of each of these zones.

12. Method according to one of Claims 10 and 11, **characterized in that** the abovementioned base value is a function of the average of at least two successive measured data.

13. Method according to either of Claims 10 and 11, **characterized in that** it consists, in the course of the movements of the closure, in setting, every time the abovementioned difference passes through zero, a supplementary safety threshold which is a function of the value of the data measured in this segment, and in causing a safety stopping of the said motor element during the subsequent movement of the closure in the event that a measured value of the subsequent abovementioned data reaches this complementary safety threshold.

14. Method according to any one of the preceding claims, **characterized in that** it consists in modifying the duration of each of the abovementioned time segments and/or zones as a function of the energy delivered by the energy source causing the said motor element to operate.

## Patentansprüche

1. Verfahren zur Steuerung der Bewegung eines Öffnungselements wie einer Tür, einer Schranke, einer Klappe oder anderen, das über mindestens einen Teil des Weges des Öffnungselements von einem Antriebselement geführt wird, wobei das Antriebselement durch eine Befehlsfolge Start (M1)-Stopp (A) in Betrieb gesetzt oder angehalten werden kann, die darin besteht, eine anfängliche Sicherheitsschwelle entsprechend einem Wert festzulegen, der bestimmt wird durch eine Basisgröße, die repräsentativ ist für die von dem Antriebselement zum Führen des Öffnungselements gelieferten Kraft, die Basisgröße im Laufe der Bewegung des Öffnungselements zu messen, diesen Messwert dieser Basisgröße mit der anfänglichen Sicherheitsschwelle zu vergleichen und einen Sicherheitsstopp des Antriebselements zu veranlassen, wenn der Messwert dieser Basisgröße diese anfängliche Sicherheitsschwelle erreicht, **dadurch gekennzeichnet, daß** es im Anschluß an den genannten Sicherheitsstopp (AS) aus einer neuen Befehlsfolge (M2) besteht, die anfängliche Sicherheitsschwelle (S1) zu inhibieren, eine neue Sicherheitsschwelle (S2) festzulegen, die repräsentativ ist für eine höhere Kraft, und die Wiederinbetriebnahme des Antriebselements (6) zu veranlassen, und daß es darin besteht, einen Sicherheitsstopp (AS) des Antriebselements zu veranlassen, wenn der Messwert der Basisgröße die neue Sicherheitsschwelle (S2) erreicht.

2. Verfahren nach Anspruch 1, **dadurch gekennzeichnet, daß** dann, wenn der Messwert der Basisgröße zumindest anläßlich der folgenden Bewegung des Öffnungselements erneut die anfängliche Sicherheitsschwelle (S1) erreicht, die genannte anfängliche Sicherheitsschwelle (S1) durch die genannte neue Sicherheitsschwelle (S2) ersetzt wird.

3. Verfahren nach irgendeinem der vorangehenden Ansprüche, **dadurch gekennzeichnet, daß** am Ende einer vorbestimmten Zeitdauer oder einer vorbestimmten Anzahl von Bewegungen des Öffnungselements im Anschluß an den genannten Sicherheitsstopp (AS) die genannte neue Sicherheitsschwelle (S2) durch die anfängliche Sicherheitsschwelle (S1) ersetzt wird, wenn der Messwert der Basisgröße am Ende der Zeitdauer oder der Anzahl nicht die neue Sicherheitsschwelle (S2) erreicht.

4. Verfahren nach irgendeinem der vorangehenden Ansprüche, **dadurch gekennzeichnet, daß** es darin besteht, mindestens eine maximale Sicherheitsschwelle (SM) festzulegen, die repräsentativ ist für eine maximale Kraft, und einen Sicherheitsstopp (AD) des Antriebselements zu veranlassen, wenn der Messwert der genannten Basisgröße diese maximale Sicherheitsschwelle erreicht.

5. Verfahren nach irgendeinem der vorangehenden Ansprüche, **dadurch gekennzeichnet, daß** die genannte neue Befehlsfolge (M2) identisch ist mit der Start-Befehlsfolge (M1).

6. Verfahren nach irgendeinem der vorangehenden Ansprüche, **dadurch gekennzeichnet, daß** die genannte neue Befehlsfolge (M2) aus einer besonderen Befehlsfolge besteht.

7. Verfahren nach irgendeinem der vorangehenden Ansprüche, **dadurch gekennzeichnet, daß** die genannte neue Befehlsfolge (M2) in der Beibehaltung der Start-Befehlsfolge (M1) zumindest über eine vorbestimmte Zeitdauer besteht.

8. Verfahren nach irgendeinem der vorangehenden Ansprüche, **dadurch gekennzeichnet, daß** die neue Befehlsfolge (M2) aus der Start-Befehlsfolge (M1) besteht, vorausgesetzt, daß diese Start-Befehlsfolge höchstens mit einer Verzögerung aktiviert wird, die bestimmt wird in Bezug auf den Zeitpunkt des genannten Sicherheitsstopps.

9. Verfahren nach irgendeinem der vorangehenden Ansprüche, **dadurch gekennzeichnet, daß** mehrere anfängliche Sicherheitsschwellen (S1, S2) über die Wegstrecke des Öffnungselements verteilt festgelegt werden, denen jeweils neue Sicherheitsschwellen zugeordnet sind.

10. Verfahren nach irgendeinem der vorangehenden Ansprüche, **dadurch gekennzeichnet, daß** es im Laufe jeder Bewegung des Öffnungselements besteht aus:
- Einteilen mindestens eines Teils der Öffnungs- und/oder Schließzeit entsprechend dem Gesamtweg des Öffnungselements in Zeitabschnitte und mindestens eines Teils dieses Weges in Verstellungsabschnitte,
- Durchführen im Laufe jeder Öffnungs- und/oder Schließbewegung des Öffnungselements in jedem der vorgenannten Abschnitte der Messung einer Größe, die repräsentativ ist für die von dem Antriebselement gelieferte Kraft,
- Berechnen der Differenzen, die bestehen aus der Differenz zwischen einem Grundwert, der abhängig ist von mindestens dem Messwert der genannten Größe in jedem der vorgenannten Abschnitte und einem Grundwert, der abhängig ist von mindestens dem Messwert der genannten Größe in dem vorangehenden Abschnitt,
und daß es darin besteht:
1) im Laufe einer Übungsbewegung:
- in jedem der genannten Abschnitte eine anfängliche Sicherheitsschwelle festzulegen, die abhängt von der vorgenannten Differenz, die mindestens einem Abschnitt zugeordnet ist,
2) und im Laufe jeder Bewegung des Öffnungselements, die der Übungsbewegung folgt:
- die jedem Abschnitt zugeordnete Differenz nacheinander mit der zugeordneten anfänglichen Sicherheitschwelle zu vergleichen,
- und einen Stopp des Antriebselements zu veranlassen, wenn diese Differenz diese anfängliche Sicherheitsschwelle erreicht.

11. Verfahren nach Anspruch 10, **dadurch gekennzeichnet, daß** es darin besteht, mindestens einen Teil der Öffnungs- und/oder Schließzeit entsprechend dem Gesamtweg des Öffnungselements in Zeitzonen einzuteilen und eine gemeinsame anfängliche Sicherheitsschwelle in den vorgenannten Abschnitten jeder dieser Zonen festzulegen.

12. Verfahren nach einem der Ansprüche 10 oder 11, **dadurch gekennzeichnet, daß** der vorgenannte Grundwert abhängig ist von dem Mittelwert von mindestens zwei nacheinander gemessenen Größen.

13. Verfahren nach irgendeinem der Ansprüche 10 bis 11, **dadurch gekennzeichnet, daß** es darin besteht, im Laufe der Bewegung des Öffnungselements jedesmal, wenn die vorgenannte Differenz Null durchläuft, eine ergänzende Sicherheitsschwelle festzulegen, die abhängig ist von dem in diesem Abschnitt gemessenen Wert der Größe, und einen Sicherheitsstopp des Antriebselements bei der späteren Bewegung zu veranlassen, wenn der Messwert der genannten späteren Größe diese ergänzende Sicherheitsschwelle erreicht.

14. Verfahren nach irgendeinem der vorangehenden Ansprüche, **dadurch gekennzeichnet, daß** es darin besteht, die Dauer jedes der vorgenannten Abschnitte und/oder der vorgenannten Zeitzonen, in Abhängigkeit von der Energie zu modifizieren, die von der Energiequelle geliefert wird, welche das Antriebselement antreibt.
